# EUROPÄISCHE PATENTSCHRIFT

(11) **EP 1 637 111 B1**
(45) Veröffentlichungstag und Bekanntmachung des Hinweises auf die Patenterteilung: **23.07.2008**
(21) Anmeldenummer: 05019319.2
(22) Anmeldetag: 06.09.2005
(51) Int. Cl.: A61G 5/04, A61G 5/10

(54) **Fahrzeug mit in der Neigung verstellbarem Fahrersitz**
Vehicle with a seat adjustable in inclination
Véhicule ayant un siège à inclinaison ajustable

(30) Priorität: 18.09.2004 DE 102004045388
(43) Veröffentlichungstag der Anmeldung: 22.03.2006
(73) Patentinhaber: Otto Bock HealthCare IP GmbH & Co. KG, 37115 Duderstadt (DE)
(72) Erfinder: Brendel, Thomas, 74889 Sinsheim (DE); Biederstädt, Andreas, 24147 Klausdorf (DE)
(74) Vertreter: Rehmann, Thorsten

(56) Entgegenhaltungen:
- DE-A1- 19 821 451
- DE-A1- 19 824 493
- US-B1- 6 206 393

## Beschreibung

Die Erfindung betrifft ein Fahrzeug, insbesondere einen Elektrorollstuhl, mit einem Fahrgestell und einem daran entlang zweier bogenförmiger Schienen in seiner Neigung zum Fahrgestell einstellbaren Fahrersitz, einem Neigungssensor, der die Winkellage der Sitzfläche des Fahrersitzes gegenüber der Horizontalen ermittelt, einer mit dem Fahrgestell und dem Fahrersitz verbundenen Stelleinrichtung und einer mit dem Neigungssensor und der Stelleinrichtung in Wirkverbindung stehenden Steuer- und Regeleinrichtung, über die der Fahrersitz mittels einer Stelleinrichtung so verschwenkbar ist, dass seine Sitzfläche immer im Wesentlichen parallel zur Horizontalen liegt.

Ein solches Fahrzeug ist beispielsweise aus der DE 198 21 451 A1 bekannt.

Zum Befahren von Wegen und Straßen verwenden gehbehinderte Menschen sehr häufig Elektrorollstühle. Für den Außenbereich gibt es speziell konzipierte Fahrzeuge, die gegenüber hauptsächlich für den Innenbereich konzipierten Fahrzeugen über einen stärkeren Antrieb und stabilere Fahrwerksdimensionierungen verfügen, so dass mit ihnen auch steilere Berg- bzw. Gefällstrecken bewältigt werden können. Beim Bergabfahren ergibt sich das Problem, dass der den Rollstuhl benutzende Mensch infolge des veränderten Winkels zur Schwerkraftachse die Tendenz hat, auf der Sitzfläche des Fahrersitzes durchzurutschen. Infolge ihrer Behinderung besitzen die Fahrer von Elektrorollstühlen vielfach eine verminderte Muskelfunktionalität und können somit nicht körperaktiv den veränderten Schwerpunktbedingungen entgegenwirken. Deswegen muss entweder eine Fixierung des Menschen am Sitz über ein Gurtsystem erfolgen; was dann mit einer erhöhten Druckbelastung des unter dem Gurt liegenden Gewebes einhergeht oder es muss eine Sitzwinkelverstellung vorgesehen sein, durch die die Neigung des Fahrersitzes zum Fahrgestell eingestellt werden kann.

Beim in der DE 198 21 451 A1 offenbarten Fahrzeug wird die Neigung der befahrenen Oberfläche mittels eines Sensors erfasst. Der Fahrersitz ist auf fest am Fahrgestell montierten Schienen über Räder beweglich gelagert, die durch einen Elektromotor antreibbar sind. Aus der vom Sensor ermittelten Neigung wird die Position des Fahrersitzes auf den Schienen errechnet, in der sich der Fahrersitz in waagerechter Position befindet. Die Führungsschienen des Fahrersitzes sind derart ausgestaltet, dass sich der Fahrersitz bei der Fahrt über eine horizontale Oberfläche am höchsten Punkt der Schienen befindet. Beim Verschieben des Fahrersitzes entlang der gebogenen Teile der Führungsschienen bei der Fahrt über geneigte Oberflächen findet zusätzlich zur eigentlichen Sitzwinkelverstellung eine große translatorische Bewegung des Fahrersitzes statt, was vom Fahrer als unangenehm empfunden wird. Für diese zusätzliche Bewegung ist nicht nur ein erheblicher Kraft- und Energieaufwand nötig, wofür eine entsprechend große und schwere Antriebseinheit verwendet werden muss, sondern auch eine entsprechend lange Reaktionszeit, Insbesondere bei Bergabfahrt, wo der Fahrer nicht abgestützt wird, wird dies als sehr unangenehm empfunden. Kurze geneigte Strecken, wie beispielsweise eine Rampe, können überhaupt nicht ausgeglichen werden, bzw. wenn der Ausgleich erfolgt ist, befindet sich der Rollstuhl schon wieder in der Horizontalen, während der Fahrersitz noch geneigt ist, was keinen hohen Fahrkomfort gewährleistet.

In der EP 0 829 247 A2 wird ein Rollstuhl beschrieben, der aus einem Fahrgestell und einem auf dem Fahrgestell montierten Sitz besteht, bei dem die Neigung der Sitzfläche durch Stellglieder jede gewünschte Position erreichen kann. Eine Neigungsmesseinrichtung steuert die Stellglieder, so dass die Neigung der Sitzfläche auch dann horizontal gehalten werden kann, wenn der Rollstuhl unebenes Gelände passiert.

In der DE 198 24 493 A1 ist ein Rollstuhl offenbart, dessen Fahrersitz frei drehbar gelagert ist und nur durch die Einwirkung der Schwerkraft in horizontaler Position gehalten wird, also ohne eigenen Antrieb auskommt. Die Nachführung des Sitzwinkels findet durch Drehung des Fahrersitzes um den Aufhängepunkt statt. Diese Funktionsweise setzt einen Mindestabstand zwischen Massendrehpunkt des Fahrers und dem Aufhängepunkt voraus, damit es überhaupt zu einer Winkelnachführung kommt. Folglich ist der Fahrer auch in dieser Ausführungsform beim Verschwenken des Fahrersitzes einer relativ großen Bewegung unterworfen. Außerdem kann eine unbeabsichtigte Bewegung des Fahrersitzes so nicht verhindert werden. Bei der plötzlichen Anderung des Neigungswinkels der befahrenen Oberfläche, beispielsweise bei der Fahrt auf eine oder von einer Rampe, kann es zu Pendelbewegungen des Fahrersitzes kommen. Zusätzlich wird der Fahrersitz auch in Bewegung versetzt, wenn der Fahrer sich abstützt, um beispielsweise seine Sitzposition zu verändern. Diese unbeabsichtigten Bewegungen des Fahrersitzes rufen beim Fahrer ein unangenehmes Gefühl der Instabilität hervor.

Von dieser Problemstellung ausgehend soll die Lagerung des Fahrersitzes des eingangs beschriebenen Fahrzeugs so verbessert werden, dass sie einen hohen Komfort bietet und die Verwendung einer kleinen Antriebseinheit ermöglicht.

Erfindungsgemäß wird dies bei einem gattungsgemäßen Fahrzeug dadurch erreicht, dass er, bei Bergabfahrt des Fahrzeuges um einen virtuellen Drehpunkt schwenkbar ist, der sich in der Nähe des Massendrehpunktes eines auf dem Fahrersitz sitzenden Fahrers befindet.

Durch diese Ausgestaltung wird der Fahrersitz der Hangneigung der Straße entsprechend entgegengerichtet verschwenkt, so dass der Fahrer auch bei Bergabfahrt immer im Wesentlichen parallel seiner Schwerkraftachse sitzt und auch ohne Gurtfixierung das Fahrzeug sicher führen kann. Durch die Nähe des virtuellen Drehpunktes zum Schwerpunkt des Fahrers ist zum Verschwenken nur ein kleines Drehmoment nötig. Außerdem wird durch die Rollen eine reibungsarme Lagerung und Winkelverstellung möglich, Dadurch kann die verwendete Stelleinrichtung entsprechend klein dimensioniert und ein kurzfristiges Ansprechverhalten erzielt werden.

Da die Rollen gegenüber einer Bezugsebene am Fahrgestell einen unterschiedlichen vertikalen Abstand aufweisen, erlauben die ausgebildeten Führungsschienen bogenförmig eine konstruktiv einfache und gleichmäßige Schwenkbewegung erlaubende Führung des Fahrersitzes. Die Schwenkbewegung wird durch die Steuer- und Regeleinrichtung so geregelt, dass die Sitzfläche des Fahrersitzes bei Bergabfahrt immer im Wesentlichen parallel zur Horizontalen H liegt.

Wenn jeweils vier Rollen vorgesehen sind, können diese paarweise gegenüberliegend angeordnet werden und die Schiene von oben und unten führen, so dass ein Herausrutschen der Führungsschienen auch bei einer Fahrt durch unebenes Gelände bzw. über Schlaglöcher ausgeschlossen ist.

Die Führungsschienen sind im Querschnitt vorzugsweise rund ausgebildet.

Als Stelleinrichtung kann ein Teleskopzylinder verwendet werden, der über einen linearen Elektromotor antreibbar ist.

Mit Hilfe einer Zeichnung soll ein Ausführungsbeispiel der Erfindung nachfolgend näher beschrieben werden.

Es zeigt:

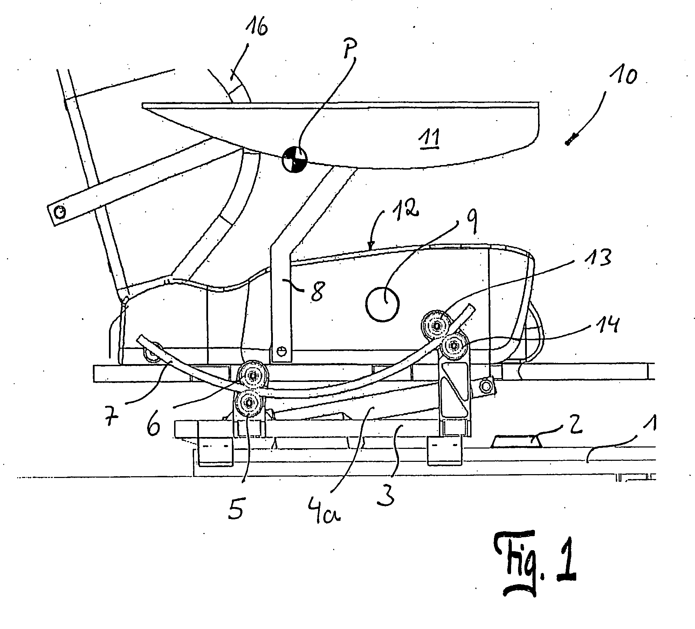

- Figur 1: Die Teilseitenansicht eines auf dem Fahrgestell befestigten Fahrersitzes in Normalstellung;

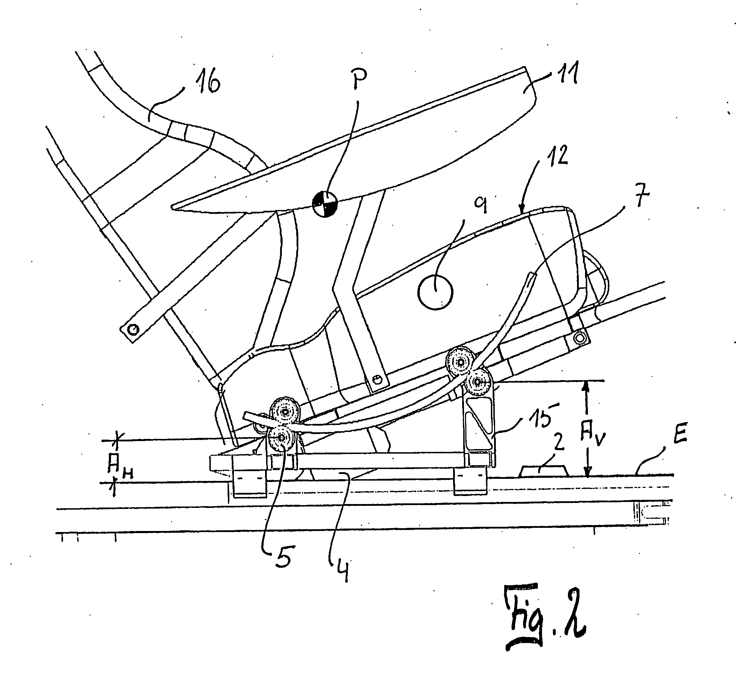

- Figur 2: die Teilseitenansicht eines auf dem Fahrgestell befestigten Fahrersitzes in geneigter Stellung;

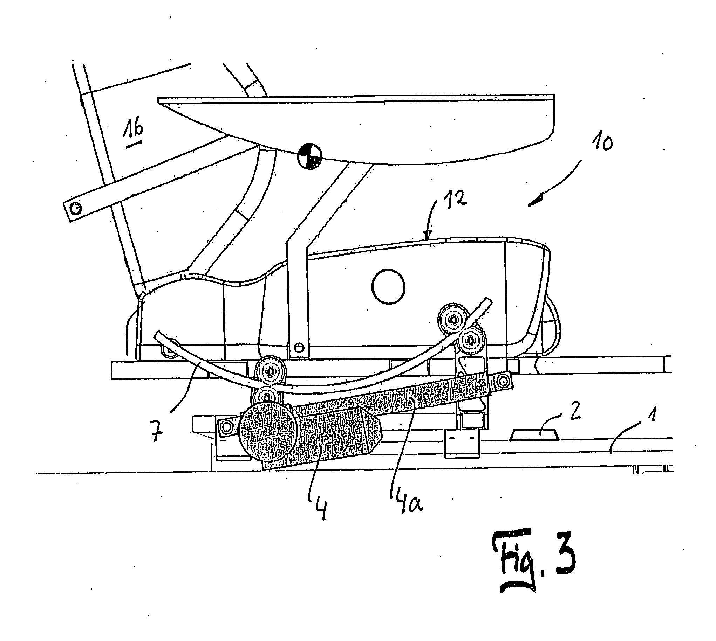

- Figur 3: die Ansicht gemäß Figur 1 mit freigelegter Stelleinrichtung;

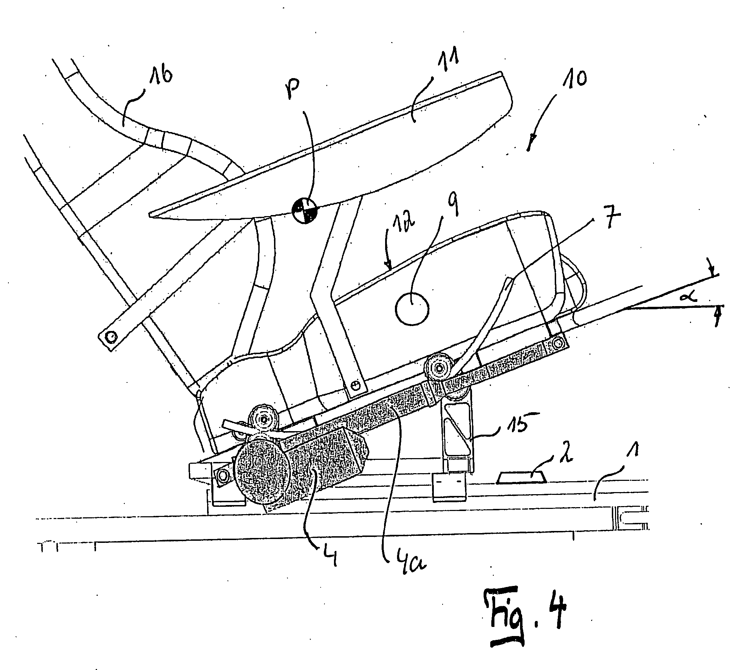

- Figur 4: die Darstellung gemäß Figur 2 mit freigelegter Stelleinrichtung;

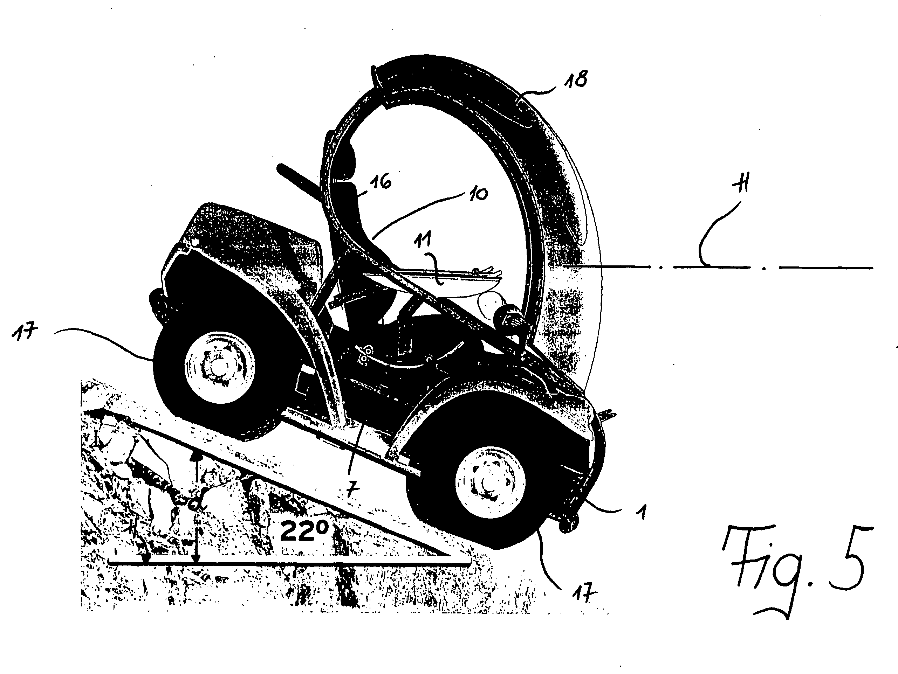

- Figur 5: die Seitenansicht eines mit dem verstellbaren Fahrersitz ausgerüsteten Fahrzeuges.

Das Fahrzeug besteht im Wesentlichen aus dem Fahrgestell 1, an dem die den Kontakt zur Straße herstellenden Räder 17 angeordnet sind und dem Aufbau 18, der den in seiner Neigung zum Fahrgestell 1 einstellbaren Fahrersitz 10 aufweist.

Der Fahrersitz 10 ist mit einer Rückenlehne 16 und einer Sitzfläche 12 sowie an Halterungen 8 befestigte Armlehnen 11 versehen. Über vordere und hintere Halter 15 und eine Grundplatte 3 ist der Fahrersitz 10 mit dem Fahrgestell 1 verbunden. An beiden Seiten des Fahrersitzes 10 sind im Querschnitt runde, bogenförmige Führungsschienen 7 befestigt, die in je vier sich paarweise gegenüberliegenden Rollen 5, 6; 13, 14 geführt werden. Mit dem Fahrersitz 10 verbunden ist ein Neigungssensor 9, mit dem die Winkellage der Sitzfläche 12 gegenüber einer Horizontalen H detektiert wird. Unter dem Fahrersitz 10 ist eine aus einem linearen Elektromotor 4 mit daran befestigter Teleskopstange 4a bestehende Stelleinrichtung angeordnet, die mit ihrem einen Ende am Fahrgestell 1 bzw. der Grundplatte 3 und mit ihrem anderen Ende am Fahrersitz 10 gelenkig befestigt ist. Über eine Steuer- und Regeleinrichtung 2 stehen der Neigungssensor 9 und die Stelleinrichtung 4, 4a miteinander in Verbindung.

Die beiden - in Fahrtrichtung F betrachtet - vorderen Halter 15 sind länger als die beiden hinteren Halter 15, so dass der Abstand Aᵥ der Rolle 14 zu einer Bezugsebene E am Fahrgestell 1 größer ist als der Abstand A_{H} der hinteren Rolle 5.

Geht das Fahrzeug in Bergabfahrt über, detektiert der Neigungssensor 9 eine Abweichung der Winkellage der Sitzfläche 12 zur Horizontalen H und über die Steuer- und Regeleinrichtung 2 wird der Stellmotor 4 angesteuert, dessen Teleskopstange 4a daraufhin ausfährt und den Sitz um den Winkel α nach hinten schwenkt, so dass die Hangneigung -α entsprechend ausgeglichen wird und die Sitzfläche 12 parallel zur Horizontalen H bleibt. Je genauer der Regelkreis arbeitet, umso exakter wird die Parallelität der Sitzfläche 12 zur Horizontalen H eingehalten. Bei der Schwenkbewegung erfolgt die Führung des Fahrersitzes 10 entlang der bogenförmig verlaufenden Führungsschienen 7, die in den Rollen 5, 6; 13, 14 laufen. Die Schwenkbewegung erfolgt um einen virtuellen Schwenkpunkt P, der so gewählt ist, dass er sich in der Nähe des Massendrehpunktes des Anwenders befindet. Hierzu kann die gesamte Einrichtung der Sitzverstellung entsprechend an den Fahrer angepasst werden.

Der Regelprozess findet kontinuierlich statt, so dass die Sitzfläche 12 ständig in einer horizontalen Ebene gehalten wird.

### Bezugszeichenliste:

- 1: Fahrgestell
- 2: Steuer-Regeleinrichtung
- 3: Grundplatte
- 4: Stellmotor
- 4a: Teleskopstange
- 5: Rolle
- 6: Rolle
- 7: Führungsschiene
- 8: Halterung
- 9: Neigungssensor
- 10: Fahrersitz
- 11: Armlehne
- 12: Sitzfläche
- 13: Rolle
- 14: Rolle
- 15: Halterung
- 16: Sitzlehne
- 17: Rad
- 18: Aufbau
- A_{H}: Abstand
- Aᵥ: Abstand
- E: Bezugsebene
- F: Fahrtrichtung
- H: Horizontale
- P: virtueller Drehpunkt
- α: Neigungswinkel
- -α: Hangneigung

## Patentansprüche

1. Fahrzeug, insbesondere Elektrorollstuhl, mit einem Fahrgestell (1) und einem daran entlang zweier bogenförmiger Schienen (7) in seiner Neigung zum Fahrgestell (1) einstellbaren Fahrersitz (10), einem Neigungssensor (9), der die Winkellage (α) der Sitzfläche (12) des Fahrersitzes (10) gegenüber der Horizontalen (H) ermittelt, einer mit dem Fahrgestell (1) und dem Fahrersitz (10) verbundene Stelleinrichtung (4, 4a), und einer mit dem Neigungssensor (9) und der Stelleinrichtung (4, 4a) in Wirkverbindung stehenden Steuer- und Regeleinrichtung (2), über die der Fahrersitz (10) mittels einer Stelleinrichtung (4, 4a) so verschwenkbar ist, dass seine Sitzfläche (12) immer im Wesentlichen parallel zur Horizontalen (H) liegt, **dadurch gekennzeichnet, dass** der Fahrersitz (10) bei Bergabfahrt des Fahrzeuges um einen virtuellen Drehpunkt (P) verschwenkbar ist, der in der Nähe des Massendrehpunktes eines auf dem Fahrersitz (10) sitzenden Fahrers liegt.

2. Fahrzeug nach Anspruch 1, **dadurch gekennzeichnet, dass** die beiden Führungsschienen (7) am Fahrersitz (10) befestigt und in jeweils mindestens zwei ortsfest mit dem Fahrgestell (1) verbundenen Rollen (5, 14) gelagert sind.

3. Fahrzeug nach Anspruch 2, **dadurch gekennzeichnet, dass** die Rollen (5, 14) gegenüber einer Bezugsebene (E) am Fahrgestell (1) einen unterschiedlichen vertikalen Abstand (A_{V}, A_{H}) aufweisen.

4. Fahrzeug nach Anspruch 2, **dadurch gekennzeichnet, dass** jeweils vier Rollen (5, 6; 13, 14) vorgesehen sind.

5. Fahrzeug nach Anspruch 1, **dadurch gekennzeichnet, dass** die Stelleinrichtung (4a) ein Teleskopzylinder ist.

6. Fahrzeug nach Anspruch 5, **dadurch gekennzeichnet, dass** der Teleskopzylinder (4a) elektromotorisch angetrieben ist.

7. Fahrzeug nach Anspruch 3, **dadurch gekennzeichnet, dass** der Abstand (Aᵥ) der in Fahrtrichtung (F) betrachtet vorderen Rollen (13, 14) größer ist als der Abstand (A_{H}) der hinteren Rollen (5, 6).

## Claims

1. A vehicle, in particular, an electric wheelchair, having a chassis (1) and a driver's seat (10) which can be adjusted thereon in its inclination with respect to the chassis (1) along two curved rails (7), an inclination sensor (9) which determines the angular position (α) of the seat surface (12) of the driver's seat (10) with respect to the horizontal (H), an adjusting device (4, 4a) which is connected to the chassis (1) and the driver's seat (10), and a control and regulating device (2) which is operatively connected to the inclination sensor (9) and the adjusting device (4, 4a) and via which the driver's seat (10) can be pivoted by means of an adjusting device (4, 4a) in such a manner that its seat surface (12) is always situated essentially parallel to the horizontal (H), **characterized in that** the driver's seat (10) can be pivoted about a virtual pivotal point (P) when the vehicle travels downhill, this virtual pivotal point being situated in the vicinity of the pivotal point of the mass of a driver sitting on the driver's seat (10).

2. A vehicle according to claim 1, **characterized in that** the two guide rails (7) are fastened to the driver's seat (10) and are mounted in each case in at least two rollers (5, 14) connected in a positionally fixed manner to the chassis (1).

3. A vehicle according to claim 2, **characterized in that** the rollers (5, 14) are at a different vertical distance (Aᵥ, A_{H}) with respect to a reference plane (E) on the chassis (1).

4. A vehicle according to claim 2, **characterized in that** four rollers (5, 6; 13, 14) are provided in each case.

5. A vehicle according to claim 1, **characterized in that** the adjusting device (4a) is a telescopic cylinder.

6. A vehicle according to claim 5, **characterized in that** the telescopic cylinder (4a) is electrically motorised.

7. A vehicle according to claim 3, **characterized in that** the spacing (Aᵥ) of the front rollers (13, 14), as viewed in the direction of travel (F), is larger than the spacing (A_{H}) of the rear rollers (5, 6).

## Revendications

1. Véhicule, en particulier fauteuil roulant électrique comprenant un châssis roulant (1) et un siège de conducteur (10) dont l'inclinaison par rapport au châssis roulant (1) est réglable le long de deux rails (7) de forme arquée, un capteur d'inclinaison (9), qui détermine l'angle (α) de la position de la surface d'assise (12) du siège de conducteur (10) par rapport à l'horizontale (H), un dispositif de réglage (4, 4a) relié au châssis roulant (1) et au siège de conducteur (10) et un dispositif de commande et de régulation (2) en relation fonctionnelle avec le capteur d'inclinaison (9) et le dispositif de réglage (4, 4a) par lesquels le siège de conducteur (10) est inclinable au moyen d'un dispositif de réglage (4, 4a) de telle sorte que sa surface d'assise (12) est toujours sensiblement située parallèlement à l'horizontale (H), **caractérisé en ce que** le siège de conducteur (10) est lors de la descente du véhicule d'une côte, inclinable autour d'un axe de rotation virtuel (P) qui se trouve à proximité du centre de rotation des masses d'un conducteur assis sur le siège de conducteur (10).

2. Véhicule selon la revendication 1, **caractérisé en ce que** les deux rails de guidage (7) sont fixés au siège de conducteur (10) est sont chacun montés sur au moins deux rouleaux (5, 14) reliés fixement au châssis roulant (1).

3. Véhicule selon la revendication 2, **caractérisé en ce que** les rouleaux (5, 14) présentent par rapport à un plan de référence (E) du châssis roulant (1) une distance verticale (Aᵥ, A_{H}) différente.

4. Véhicule selon la revendication 2, **caractérisé en ce que**, dans chaque cas, quatre rouleaux (5, 6, 13, 14) sont prévus.

5. Véhicule selon la revendication 1, **caractérisé en ce que** le dispositif de réglage (4a) est un cylindre télescopique.

6. Véhicule selon la revendication 5, **caractérisé en ce que** le cylindre télescopique (4a) est entraîné de façon électromotrice.

7. Véhicule selon la revendication 3, **caractérisé en ce que** la distance (Aᵥ) des rouleaux avant (13, 14) considérés dans le sens de déplacement (F) du véhicule est plus grande que la distance (A_{H}) des rouleaux arrière (5, 6).
